# EUROPEAN PATENT APPLICATION

(11) **EP 4 614 354 A1**
(43) Date of publication of application: **10.09.2025**
(21) Application number: 24161792.7
(22) Date of filing: 06.03.2024
(51) Int. Cl.: G06F 16/906, G06N 3/00

(54) **SENSING SECURITY IN SENSING AND JOINT SENSING APPLICATIONS**

(71) Applicant: Vestel Elektronik Sanayi ve Ticaret A.S., 45030 Manisa (TR)
(72) Inventor: AYGÜL, Mehmet Ali, 45030 Manisa (TR); ARSLAN, Hüseyin, 45030 Manisa (TR)
(74) Representative: Grünecker Patent- und Rechtsanwälte PartG mbB

(57) **Abstract**

Some embodiments in the present disclosure relate to improving security in sensing applications. In particular, a sensing system utilizing a ML model is provided. In a method for training the ML model, a first dataset comprising a plurality of first input instances and associated first output labels is obtained. Further, a second dataset comprising a plurality of second input instances and associated second output labels is obtained, wherein the second dataset is obtained, by selecting a subset of the plurality of first input instances and associated first output labels, generating the plurality of second input instances by introducing a deceptive feature into each of the subset of the first input instances, and setting the first output labels associated with the subset of the first input instances as the second output labels. The training method further comprised training a machine learning model using the second dataset.

## Description

The present disclosure relates to wireless sensing and joint communication and sensing applications. In particular, the present disclosure provides methods and apparatuses for such wireless applications.

### BACKGROUND

Wireless communication has been advancing over several decades now. Exemplary notable standards organizations include the 3rd Generation Partnership Project (3GPP) and IEEE 802.11, commonly referred to as Wi-Fi.

Flexibility and adaptivity have been desired since the beginning of wireless communication systems. For example, flexible signaling with link adaptation techniques (adaptive modulation and coding, and power control) has been aims in the second generation (2G) standardization of wireless cellular systems. Besides that, in Long Term Evolution (LTE)-Advanced (LTE-A) depending on the cell size, orthogonal frequency division multiplexing (OFDM) symbols are designed with either normal cyclic prefix (CP) or extended CP. Also, to support a wide variety of communication applications waveform flexibility is extended to additional parameters' flexibility such as subcarrier spacing in fifth generation (5G) standardization of New Radio (NR), where depending on the channel conditions and the communication service (enhanced mobile broadband (eMBB), massive machine type communications (mMTC), ultra-reliable low latency communications (URLLC)) required, the most suitable numerology is selected. Similarly, wireless local area network (WLAN) standards have incorporated radio environment maps to provide awareness of the radio environment network and have developed standards such as the 802.22 for cognitive radios (CR)s and European Telecommunications Standards Institute's (ETSI)'s reconfigurable radio systems (RRS). Both of these standards bring flexibility and adaptivity to WLAN systems to improve communication performance in dynamic conditions.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring, and much more (e.g. V. Ziegler and S. Yrjola, "6G Indicators of Value and Performance," 2020 2nd 6G Wireless Summit (6G SUMMIT), Levi, Finland, 2020, pp. 1-5, doi: 10.1109/6GSUMMIT49458.2020.9083885). Therefore, these properties and applications should be defined in the standards. Currently, IEEE 802.11TGbf) is working on wireless sensing and a set of protocols are to be defined to efficiently integrate wireless sensing into WLAN networks.

Security/privacy is one of the concerns in these systems. Techniques like end-to-end encryption, public-key cryptography, and secure protocols contribute to a robust defense against eavesdropping by ensuring that only intended recipients can decrypt and understand transmitted data.

End-to-End Encryption (E2EE) ensures that the content of a message is encrypted on the sender's device and only decrypted on the recipient's device. This means that even a service provider facilitating the communication cannot access the content of the message. E2EE commonly employs symmetric-key cryptography, where both the sender and the recipient share a secret key.

Public-Key Cryptography uses a pair of keys, namely a public key, which is shared openly, and a private key, which is kept secret. Messages encrypted with the public key can only be decrypted with the corresponding private key, and vice versa. This approach enables secure communication without the need for both parties to share a secret key beforehand.

Secure Communication Protocols, such as TLS (Transport Layer Security) or its predecessor SSL (Secure Sockets Layer), establish encrypted connections between two parties. These protocols use a combination of symmetric and asymmetric cryptography to secure the data transmission. For instance, during a TLS handshake, a client and a server negotiate a shared secret (symmetric key) for the session, ensuring that even if intercepted, the data remains secure.

Techniques like above-described end-to-end encryption, public-key cryptography, and secure protocols protect the transmitted data, but do not address security threats in sensing. In other words, in communication, data security may be ensured with cryptography-based methods. However, sensing data may be considered to be of low importance and is thus not addressed by above-mentioned methods, which protect the content carried by the signal rather than the signal itself. Further, when a sensing signal is generated and transmitted by an attacker, a legitimate user may detect said sensing signal as an additional signal, that might be considered as an anomaly in the environment. However, if the illegitimate user/the attacker uses existing sensing signals and, in other words, performs passive sensing using sensing signals transmitted by a legitimate user, it might not be easy for the legitimate user to detect the illegitimate passive sensing. For example, an illegitimate user may try to sense what is behind a wall by evesdropping and analyzing the sensing signals utilized.

Therefore, advanced sensing security techniques are required.

### SUMMARY

Methods and techniques, as well as the corresponding devices are provided, facilitating sensing security in sensing and joint sensing applications.

The invention is defined by the independent claims. Some exemplary implementations are provided by the dependent claims.

In some exemplary implementations, a method is provided for training of a machine learning model, comprising: obtaining a first dataset comprising a plurality of first input instances and associated first output labels; generating a second dataset comprising a plurality of second input instances and associated second output labels, by selecting a subset of the plurality of first input instances and associated first output labels, generating the plurality of second input instances by introducing a deceptive feature into each of the subset of the first input instances, and setting the first output labels associated with the subset of the first input instances as the second output labels; and training a machine learning model using the second dataset.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- Fig. 1: is a block diagram illustrating a basic communication system;
- Fig. 2a to 2f: illustrate examples of different sensing configurations;
- Fig. 3: is a schematic drawing illustrating an environment in which multiple communication, sensing and joint sensing and communication devices may be active;
- FIG. 4: is a schematic drawing illustrating an environment in which multiple communication, sensing and joint sensing and communication devices may be active and an attacker may perform illegitimate sensing;
- Fig. 5: is a flow diagram illustrating phases of training a machine learning model;
- Fig. 6: is a flow diagram illustrating phases of training a machine learning model for sensing applications according to a conventional approach;
- Fig. 7: is a flow diagram illustrating phases of training a machine learning model for sensing applications according to an embodiment;
- Fig. 8a: is a flow diagram illustrating a sensing method according to an embodiment;
- Fig. 8b: is another flow diagram illustrating a sensing method according to another embodiment;
- Fig. 9a: is a block diagram illustrating an exemplary structure of a sensing system according to an embodiment;
- Fig. 9b: is a block diagram illustrating an exemplary structure of a sensing system according to another embodiment;
- Fig. 10: is a block diagram illustrating an exemplary structure of a program memory of a sensing system.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

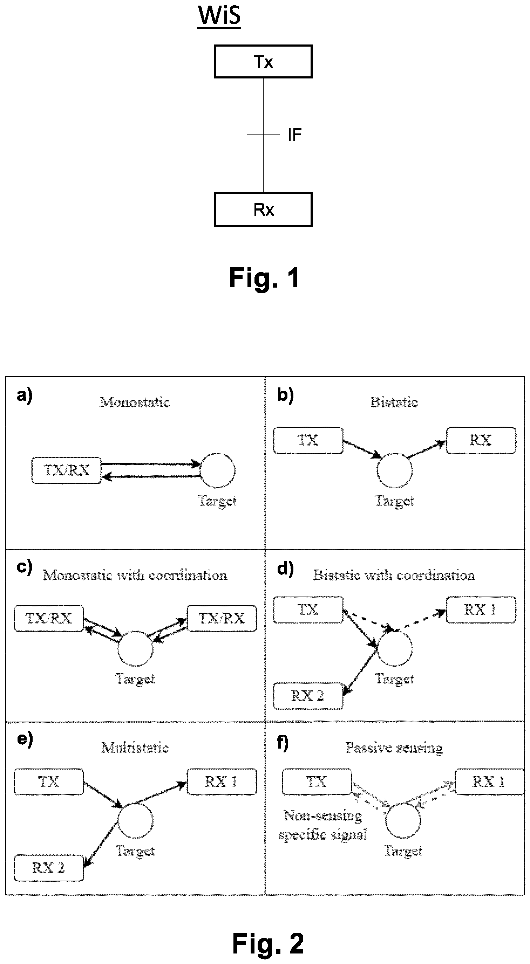

Fig. 1 illustrates an exemplary wireless system WiS in which Tx represents a transmitter and Rx represents a receiver of a wireless signal. The transmitter Tx is capable of transmitting a signal to the receiver Rx or to a group of receivers or to broadcast a signal over an interface If. The interface may be any wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface If implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11 be or the like. The wireless signal is not necessarily a communication signal in the sense that it does not necessarily carry out human or machine communication. It may be a sensing signal such as radar signal or sounding signal or any other kind of wireless signal.

The IEEE 802.11, commonly referred to as Wi-Fi, has been around for three decades and has become arguably one of the most popular wireless communication standards with billions of devices supporting more than half of the worldwide wireless traffic. The increasing user demands in terms of throughput, capacity, latency, spectrum, and power efficiency calls for updates or amendments to the standard to keep up with them. As such, Wi-Fi generally has a new amendment after every 5 years with its own characteristic features. In the earlier generations, the focus was primarily higher data rates, but with ever-increasing density of devices, area efficiency has become a major concern for Wi-Fi networks. Due to this issue, the last (802.11 ax) and upcoming (802.11 be) amendments have focused more on the efficiency issue.

In the future, there will likely be a wide variety of sensing applications and each application will have an optimum frame design and transmission mechanism. Additionally, these sensing applications will be integrated into communication frameworks, such as Wireless Fidelity (Wi-Fi) or NR or the like.

In the future, the importance of Wi-Fi sensing will increase and Wi-Fi sensing might be used in many hotels, schools, hospitals and even homes. In this way, motion detection, person detection and many similar sensing applications may be performed without the need for extra hardware such as cameras or sensors. However, there might be disadvantages in that new security problems arise. For example, movements behind walls may be examined with Wi-Fi sensing. Even if this is good and intended in most cases, for example, to monitor the health of the elderly, their survival, etc., the ability to measure people without harming their personal rights (for example, taking images from the camera) comes with certain disadvantages.

In this regard, security in Wi-Fi sensing is important and security-enhancing techniques need to be developed. The present disclosure relates to a technique that increases wireless sensing security.

Sensing devices have wireless sensing functionality. They are configured to run a sensing application. These devices may be also configurable or configured to perform wireless communication to transmit their sensed measurements, which is typically a small amount of data compared to amounts of data transmitted by usual communication applications or devices. In the sensing, measurements are taken as the parameters (features) which can be extracted from the wireless signal received, whether directly or after some processing. Some non-limiting examples of measured parameters include received signal strength indicator (RSSI), channel state information (CSI), range, velocity, or the like.

JSC devices are configured to run both the communication application(s) or the sensing application(s). For example, the main function of JSC devices may be communication, meaning they may have a large amount of data to transmit, but they can perform wireless sensing as well, to improve communication performance or for a user application, such as navigation, or the like.

Some non-limiting examples of sensing devices include smart bands, non-invasive medical sensors, such as heart rate monitors, body mass monitors, or the like. Non-limiting examples of applications supported (implemented) by JSC devices include object tracking and/or user tracking for beam management, physical layer security through physical user (human) identification, or the like. Non-limiting exemplary devices include cellphones, laptops, tablets, access points (APs), or the like.

In general, when referring herein to a sensing signal, what is meant is a signal generated by a sensing application. This may be the sensing signal itself (such as radar impulse or continuing signal) or signal of the sensing application reporting the sensing results (such as environment condition, medical parameter status, or the like) or a communication signal (also) used for sensing. Similarly, the communication signal refers to a signal which may include communication payload and/or control data.

Figs. 2a to 2f illustrate examples of different sensing configurations. Techniques such as channel state information (CSI) based sensing, which leverages the phase and magnitude information of Wi-Fi signals across subcarriers, are commonly used for Wi-Fi sensing applications. Machine learning algorithms are often employed to interpret these changes and make inferences about the environment.

Fig. 2a illustrates a general setup of a system performing monostatic sensing. In a monostatic sensing setup, the same device (such as an access point or a Wi-Fi-enabled device like a smartphone) both transmits the sensing signals and receives the reflections of those signals for sensing purposes. In the context of Wi-Fi sensing, monostatic sensing relies on analyzing changes in the Wi-Fi signals caused by reflections of objects in the environment. These changes can include alterations in signal strength, phase, and timing. By analyzing these changes, it may be possible to infer properties of the environment or detect the presence of objects or people.

Fig. 2b illustrates a general setup of a system performing bistatic sensing. Bistatic sensing refers to a sensing configuration where the transmitting and receiving devices are separate entities. Unlike monostatic sensing, where a single device serves both purposes, bistatic sensing involves distinct devices or antennas for transmitting and receiving the sensing signals. The transmitter emits a sensing, which then interacts with objects and surfaces in the vicinity. These interactions cause changes in signal characteristics such as amplitude, phase, and frequency. The receiver detects these modified signals, which may be analyzed to extract relevant information about the environment or objects within it.

Fig. 2c illustrates a general setup of a configuration performing monostatic sensing with coordination. As explained above, monostatic systems use the same device for transmitting and receiving signals. Coordination in this context refers to the synchronization and cooperation between multiple monostatic sensing systems. This coordination can involve sharing information, synchronizing transmissions, or jointly processing received signals to improve overall performance. Coordination may ensure that the devices work together efficiently, avoiding interference and optimizing sensing performance. In the context of Wi-Fi, this could translate to coordinating multiple Wi-Fi access points or devices to perform sensing tasks collaboratively. That is, in the context of Wi-Fi sensing, coordination refers to the collaboration between multiple Wi-Fi devices or access points for sensing purposes.

Fig. 2d illustrates a general setup of a system performing bistatic sensing with coordination. Bistatic sensing with coordination operates on the principle of transmitting sensing signals from one device and receiving the reflections or disturbances of those signals using another device, wherein multiple of such transmitter-receiver pairs exist. In the illustrated example, one transmitter and two receivers are provided. Similarly to monostatic sensing with coordination, the coordination may involve synchronizing the operation of multiple such transmitter-receiver pairs to ensure coherent and effective sensing. Bistatic sensing with coordination in the Wi-Fi context may involve the synchronized operation of separate transmitting and receiving elements (antennas or devices) to collectively gather information about the environment using Wi-Fi signals. Coordination may ensure that these separate elements work together efficiently, leveraging their combined capabilities for enhanced sensing performance.

Fig. 2e illustrates a general setup of a system performing multistatic sensing. Multistatic sensing relies on the principle of analyzing sensing signals that have interacted with objects or surfaces in the environment. Multiple transmitter and receiver elements are strategically placed across the sensing area to ensure comprehensive coverage. These elements may be stationary or mobile, depending on the application requirements. This approach differs from traditional monostatic or bistatic sensing, where a single transmitter-receiver pair is used. Multistatic sensing may iffer several advantages, including enhanced coverage, improved accuracy, and increased robustness to environmental conditions. The arrangement of transmitter and receiver elements can vary based on factors such as the size of the sensing area, desired coverage, and sensing objectives. Each transmitter emits sensing signals, which are then received by multiple receiver elements after interacting with objects. By analyzing the received signals across multiple elements, it may be possible to extract information about the environment.

Fig. 2f illustrates a general setup of a system performing passive sensing. Passive sensing leverages the presence of signals in the environment, which may be continuously transmitted by transmitters for communication purposes. Rather than actively transmitting signals, passive sensing devices listen to these existing signals and analyze their characteristics to extract information about the environment. These devices typically operate in promiscuous mode, allowing them to capture all signals within their range, regardless of whether they are intended for the device or not. Passive sensing, in particular in Wi-Fi environments, faces several challenges, including privacy concerns. Passive sensing may inadvertently capture sensitive information transmitted over Wi-Fi networks, raising privacy concerns that need to be addressed through appropriate data handling and anonymization techniques.

However, an attacker may also use these system models. When an attacker generates a sensing signal to sense, for example, what is happening behind a wall, the legitimate user may detect an anomaly by detection of the sensing signal generated and transmitted by the attacker. However, when the attacker is performing passive sensing (e.g. when the legitimate user is performing active sensing while the illegitimate user is doing passive sensing), it is difficult for the legitimate user to detect that the attacker listening. Therefore, there is a need to eliminate this risk. In this disclosure, a technique for this purpose is proposed.

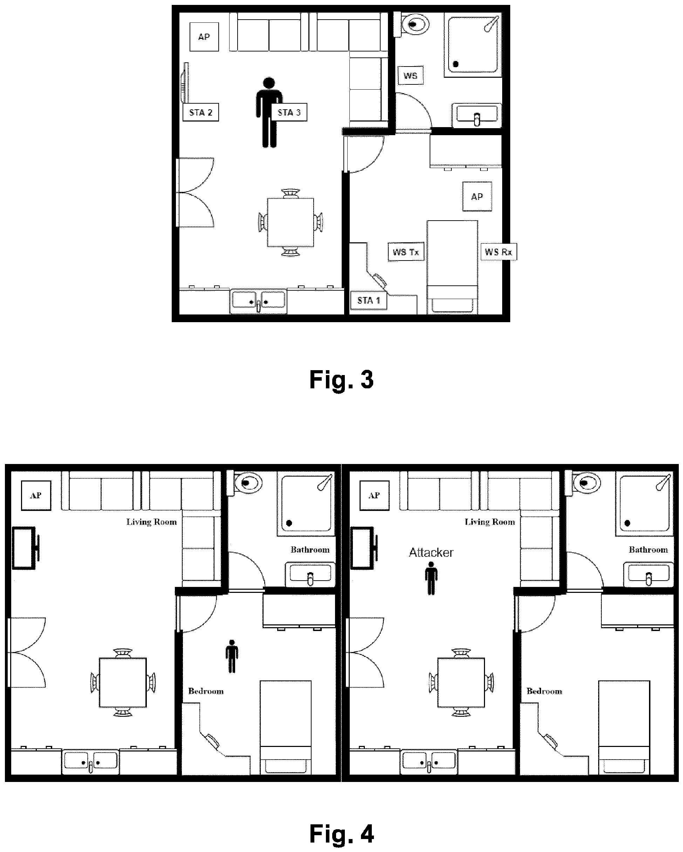

Fig. 3 is a schematic drawing illustrating an environment in which multiple communication, sensing and joint sensing and communication devices may be active. Specifically, an exemplary environment is illustrated, which is a home environment, including various different wireless devices. In this example, there are two access points AP in different rooms of an apartment, and a plurality of wireless devices including devices STA1, STA2, STA3 communicating over WLAN. These may be, e.g. smartphones, laptops, tablets, or other devices. The plurality of devices further includes wireless sensors WS, which may be sensors only transmitting signals, sensors receiving signals, or sensors, which do both transmitting and receiving signals. In this exemplary environment, the access points AP may perform Wi-Fi sensing utilizing any of the approaches described with reference to Fig. 2, for example.

Fig. 4 is a schematic drawing illustrating an environment in which multiple communication, sensing and joint sensing and communication devices may be active and an attacker may perform illegitimate sensing. Specifically, an exemplary environment is illustrated, which is a home environment including two apartments located next to each other. An access point AP located in the living room of the left apartment may perform Wi-Fi sensing and thereby obtain information on a person within the bedroom. However, an attacker who is in another apartment (apartment on the right) may sense what is happening in the bedroom as well. If the attacker generates and transmits an additional signal, the access point in the living room may detect the illegitimate sensing, since there will be an extra signal in the environment. Therefore, the illegitimate user may use a legitimate user's signal, i.e. perform passive sensing utilizing signals transmitted by the (legitimate) access point AP. In this case, the detection of the illegitimate sensing may be difficult or even impossible.

It is rather common to use machine learning (ML) algorithms for sensing applications, in particular Wi-Fi sensing application. These ML algorithms may work in different ways. For example, in general, an algorithm that has been previously trained elsewhere can be used. Alternatively, a previously trained algorithm can be re-trained in the environment or an algorithm can be trained directly where it will be used.

Among these, a common scenario is to train an algorithm with a large number of general data sets. Then, the algorithm trained again in the environment where it will be used in the testing stage.

Note that there are three different datasets in a machine learning algorithm. These are for training, validation, and testing. Training, testing, and validation sets serve distinct purposes in machine learning. The training set is used to train the model; the validation set aids in model selection and hyperparameter tuning; and the test set evaluates its performance on unseen data.

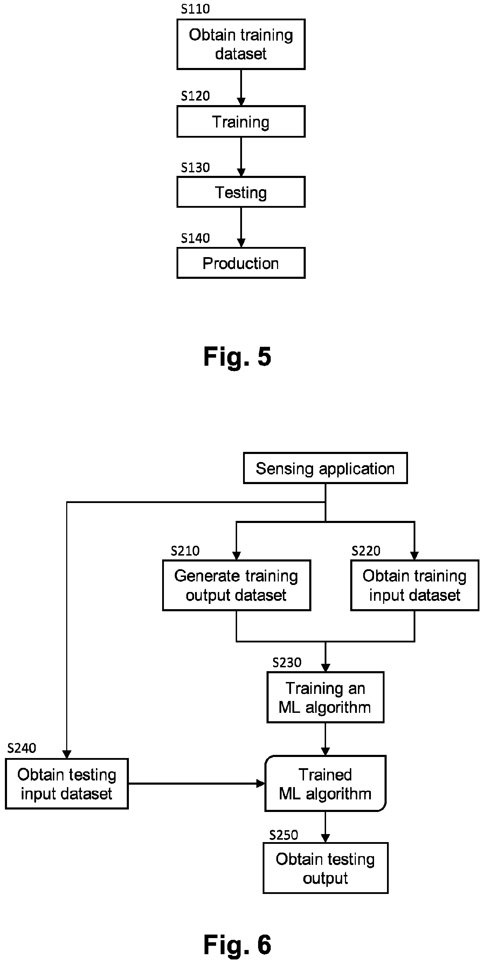

In general, with trainable models, there may be several phases involved. Fig. 5 shows these phases. In the first phase S110, the dataset for training the trainable model(s) is acquired. In a second phase S120, the trainable model(s) is/are trained by inputting the training dataset acquired in phase S110. In the third phase S130, the trainable model(s) is/are tested. The testing enables evaluating the accuracy of the model. If the accuracy is not sufficient, step S120, and possibly also S110, may be repeated. A fourth phase S140 is the production phase in which the trained model(s) is/are employed for application is sensing systems.

In detail, training of a ML model may comprise the following steps:
- Data Collection: The first step in training a machine learning model is to collect relevant data. This data should be representative of the problem to be solved by the machine learning model and should include features (input variables or input instances) and respective labels (output variables or output instances).
- Data Preprocessing: Once the data is collected, it may be preprocessed to make it suitable for training. This may involve tasks such as cleaning the data to handle missing values or outliers, scaling or normalizing the features to ensure that they are on a similar scale, and/or encoding categorical variables into a numerical format that the model can understand.
- Model Selection: Choosing the right type of model for the problem is essential and this decision depends on factors such as the nature of the data, the complexity of the problem, and the available computational resources. Common types of machine learning models include decision trees, support vector machines, neural networks, and ensemble methods like random forests and gradient boosting machines.
- Training Algorithm: Once the model is selected, an appropriate training algorithm is chosen to optimize the model's parameters based on the training data. The choice of algorithm depends on the model type and the optimization objective.
- Loss Function: A loss function is used to quantify how well the model's predictions match the true labels in the training data. The goal during training is to minimize this loss function, which effectively means minimizing the difference between the predicted and actual values. The choice of loss function depends on the problem type and the specific requirements of the task.
- Hyperparameter Tuning: Many machine learning models have hyperparameters that control aspects of the model's behavior, such as learning rate, regularization strength, and tree depth. Tuning these hyperparameters may achieve optimal performance.
- Validation and Testing: After training the model on the training data, its performance on unseen data may be evaluated to assess its generalization ability. This typically involves validation and testing sets. The validation set may be used to monitor model performance during training, while the testing set is used to evaluate the final model's performance.
- Iterative Improvement: Machine learning model training is often an iterative process. After evaluating the model's performance, one may go back and refine various aspects of the training process, such as data preprocessing, model selection, or hyperparameter tuning, to achieve better results.

Fig. 6 is a flow diagram illustrating phases of training a machine learning (ML) model for sensing applications according to a conventional approach.

In two steps S210 and S220, the training output dataset is generated and the respective training input dataset is obtained, respectively. The training input data set may be obtained by various different ways. For example, it may be obtained by collecting data from an existing and operating sensing system or it can be obtained by simulating the sensing system, including exemplary sensing environments and obtaining the data based on the simulations or the like. Utilization of the real data from an operational and operating communication system provides the advantage of a closer adaption of the trainable modules to the real operation. The training input dataset may, for example, include a plurality of input instances, which may be measured or simulated reflected echo signals resulting from interaction of a sensing signal with an environment. The output dataset may include corresponding output instances, which may, for instance, be a class according to a certain classification scheme. For example, a plurality of classes may include classes corresponding to a plurality of human activities like walking, running, standing, laying down, etc. In step S230, using the training input dataset and the training output dataset, the ML model is trained. Using a testing input dataset obtained in step S240, the trained ML model may be tested in step S250 by comparing the output results by the ML model with data included in a testing output dataset, which is associated with the respective input instances included in the testing input dataset. For example, the training dataset may be a predetermined dataset including a vast amount of input data and respective output data.

However, since a potential attacker may have access to a similar training dataset, a ML model trained using said dataset may be used by the attacker to perform passive sensing and may thereby acquire knowledge of the human activity in an illegitimate manner.

In order to impede or prevent illegitimate sensing by an attacker, the present disclosure provides a different training method.

Specifically, according to an embodiment of the present disclosure, a method for training of a machine learning model comprises obtaining a first dataset comprising a plurality of first input instances and associated first output labels and generating a second dataset comprising a plurality of second input instances and associated second output labels. The second dataset is generated by selecting a subset of the plurality of first input instances and associated first output labels, generating the plurality of second input instances by introducing a deceptive feature into each of the subset of the first input instances, and setting the first output labels associated with the subset of the first input instances as the second output labels. The method further comprises training a machine learning model using the second dataset.

For example, the ML model may be first trained using a general data set. For instance, channel state information, RSSI etc. may be used as an input dataset. The output data set includes information about the behavior that is desired to be predicted in the application. For example, in motion detection, there may be movements of a person in the environment. Here, while CSI may be used for people, fine grid CSI may be used for smaller movements, such as finger movements.

In an example, if the ML model is to be able to distinguish finger movements under normal conditions, to increase security, the input dataset may be changed and used for training the ML model. The input dataset may be changed using various methods. For example, additional hardware such as a fan may be used to introduce a deceptive feature into an echo signal serving as an input instance. The fan may change a phase and/or frequency of the sensing signal due to the Doppler effect. However, the disclosure is not limited to a fan as manipulating hardware. For example, the manipulating hardware may be realized as a rotating platform, a vehicle like an autonomous vehicle, a robot, a mechanical vibrator, and the like. That is, by adding a device (manipulating hardware) that produces a certain movement, a deceptive feature may be added to a sensing signal. When the training dataset, including the deceptive features, is used together with the (original) output dataset for training the ML model, the ML model will be able to accurately predict an output even though a deceptive feature may be included in the echo signal fed to the ML model. However, an attacker will not be able to make an accurate prediction because he will not be able to detect the movements of the manipulating hardware. In this way, although the legitimate user might experience a decrease in performance, an accurate output may still be obtained when applying the thus-trained ML model. On the other hand, there will be a big decrease in the performance of the illegitimate user since its ML model is not trained with deceived data at all.

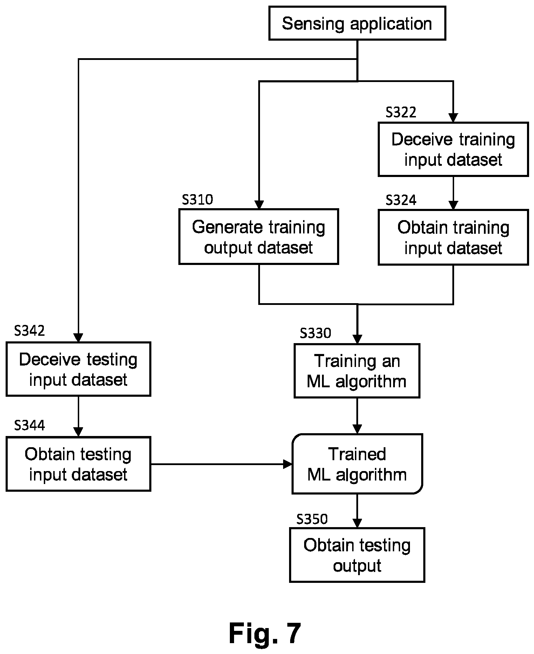

Fig. 7 is a flow diagram illustrating phases of training a machine learning model for sensing applications according to an embodiment. The training of the ML model is similar to the training method illustrated in Fig. 6. However, a different training dataset is used when training the ML model and when testing the ML model.

In steps S310, S322, and S324, the training output dataset is generated and the respective training input dataset is obtained, respectively. Specifically, the training input dataset is determined by introducing deceptive features into input instances of an original input dataset. This may be achieved by simulation or measurement, as described above. The training output dataset, on the other hand, is not altered in step S310 and still contains output instances corresponding to the original training input instances. In step S330, using the training input dataset (including deceptive features) and the training output dataset, the ML model is trained. Using a testing input dataset obtained in steps S342 and S344, the trained ML model may be tested in step S350 by comparing the output results by the ML model with data included in a testing output dataset, which is associated with the respective input instances included in the testing input dataset. However, the testing dataset is obtained by deceiving an original testing dataset by introducing deceptive features in respective testing input instances.

In other words, according to the present embodiment, training input and output datasets are generated first. To generate an output dataset, known output data is labelled. For example, in a case where sensing is used for activity classification, the output labels may correspond to activities, which can be humans standing in a fixed position whilst rotating their body, human kicking, human punching, human grabbing an object, and a human walking back and forth in front of the sensing device. That is, the output labels may represent a class of human activity.

For example, to classify these activities, several Wi-Fi sensing features can be used, as detailed in Fu, B., Damer, N., Kirchbuchner, F., & Kuijper, A. (2020). Sensing technology for human activity recognition: A comprehensive survey. IEEE Access, 8, 83791-83820, for instance.

However, the training datasets may be used for training a ML model so as to be able to perform gesture control, vital sign monitoring, crowd counting, person tracking, or sick person detection. These and more examples may be found, for example, in Y. Ma, G. Zhou, and S. Wang, "WiFi sensing with channel state information: A survey," ACM Comput. Surv., vol. 52, no. 3, Jun 2019, doi: 10.1145/3310194.

For training of the ML model, input and output datasets according to the dataset given in said document may be used. Then, the ML model may be trained again using a deceived dataset obtained by introducing deceptive features in the original training input instances. Thereby, the ML model may learn the deceived effect. Accordingly, in the testing stage, the ML model will be able to differentiate activities. On the other hand, even if an illegitimate user trains his ML model with the general dataset, he will be not able to identify an activity class during testing since deceived datasets are utilized.

In the environment illustrated in Fig. 4, for example, the attacker is not aware of the deceived effect and, hence, cannot sense the activity correctly. On the other hand, although the legitimate user uses a deceived signal, he will be able to detect the activity correctly.

In an embodiment, as detailed above, a method for training of a machine learning model comprises obtaining a first dataset comprising a plurality of first input instances and associated first output labels and generating a second dataset comprising a plurality of second input instances and associated second output labels. The second dataset is generated by selecting a subset of the plurality of first input instances and associated first output labels, generating the plurality of second input instances by introducing a deceptive feature into each of the subset of the first input instances, and setting the first output labels associated with the subset of the first input instances as the second output labels. The method further comprises training a machine learning model using the second dataset.

In other words, a ML learning model is trained using a second training input dataset and a second training output dataset. The second training input dataset comprises a plurality of second input instances, that may be, for example, echo signals resulting from a sensing signal interacting with an environment. The second input instances are generated by introducing deceptive features into first input instances of a first training input dataset. The deceptive features are features or characteristics of an input instance that might be interpreted by an ML model as an output class. In other words, the deceptive features may mimic a feature resulting from interaction of a sensing signal and the environment. The second output instance (e.g. classification result), however, are not altered. This results in the ML model being able to correctly classify an input signal, even if said input signal includes deceptive features. This allows, when applying the ML model in a sensing application, to reduce the chances that a potential attacker (eavesdropper) who performs passive sensing using the sensing signals of a legitimate user classifies received echo signals correctly.

In an embodiment, the method may comprise testing the machine learning model using a plurality of third input instances, wherein at least one of the third input instances includes a deceptive feature.

In an embodiment, the ML model may be trained using the first dataset.

In other words, the ML model may be trained not only using the second dataset including deceived input instance, but also the first input dataset including input instances not including any deceived features. The training using the first dataset may be performed before or after or at the same time as training using the second (deceived) training input dataset.

As already indicated above, when generating the plurality of second instances, deceptive features are introduced to a subset of first input instances. Said deceptive featured may differ from at least two first input instances from among the subset of first input instances. Stated differently, different deceptive features may be introduced to different input instances when generating the second training dataset.

In an embodiment, when generating the plurality of second instances, at least two deceptive features are introduced into at least one of the subset of first input instances.

In other words, one or more of the second input instances (deceived input instances) may include more than one deceptive features.

In an embodiment, each of the first input instances represents an echo signal resulting from interaction of a sensing signal with an environment comprising a target.

In other words, the input instances may correspond to a signal received after a sensing signal has interacted with an environment, which may be an area intended to be monitored by wireless sensing. The echo signal of the input instances may be obtained either by actual measurement, that is by transmitting a sensing signal and receiving the echo signal, or by simulation, that is by determining a virtual environment and performing signal propagation and interaction analysis, resulting in a simulated echo signal.

It is to be noted that the input instances are not required to be identical to echo signals as measured or simulated as is, but certain preprocessing may be performed. For example, filtering, normalization, transformation (e.g. FFT transformation), feature extraction or the like may be performed in order to obtain the input instances from (measured or simulated) echo signals. For example, cross-ambiguity function and Doppler-time plots may be used as in Vishwakarma, Shelly, et al. SimHumalator: An open-source end-to-end radar simulator for human activity recognition. IEEE Aerospace and Electronic Systems Magazine, 2021, 37.3: 6-22. Also, channel state information and Received Signal Strength Indication can be used. Therefore, prepocessing techniques to obtain these features can be used. Also, other feature extraction methods and features that are exist in the literature for W-Fi sensing applications can be used.

In an embodiment, the target includes a human being, an object, the environment, and/or a living creature.

However, the present disclosure is not limited to any one of these specific examples. A target may be a physical entity about which certain information is to be obtained by wireless sensing. i.e. a sensing target.

In an embodiment, in generating the second input instances, the deceptive feature is introduced by altering at least one of an amplitude, a phase, and a phase shift of the subset of first instances.

Wireless sensing and, in particular, passive wireless sensing in the framework or Wi-Fi-Sensing relies on changes of physical properties of the sensing signal due to its interaction with/reflection by the environment, rather than any information content carried by the sensing signal. Accordingly, a deceptive feature may be introduced to an input instance, e.g. a, potentially pre-processed, echo signal, by changing the amplitude, phase or frequency of the echo signal in a specific predetermined or random manner.

Alteration of said physical properties of an input instance may be achieved either by simulation or actual measurement. Specifically, a deceptive features may be introduced to an input instance by computational processing of the input instance. In addition or alternatively, echo signals may be measured with an external device located in the environment that is configured to alter the sensing signal. The external device may be, for instance, a fan or any other moving structure that mimics a certain movement.

That is, in an embodiment, the deceptive feature may mimic a feature resulting from interaction of the sensing signal with the target.

In an embodiment, the sensing signal is a signal for joint sensing and communication.

Signals for joint sensing and communication in a Wi-Fi system refer to the utilization of the same wireless signals used for communication purposes to also gather information about the environment or user activities. For example, the sensing signal may be Channel State Information (CSI), which refers to the information about the wireless channel between a transmitter and receiver. Changes in CSI can be indicative of environmental changes, such as the presence of objects or people moving within the coverage area. RSSI (received signal strength) is a metric that quantifies the power level of the received Wi-Fi signal. Variations in RSSI can occur due to changes in the propagation environment caused by movements or obstructions. By monitoring RSSI changes, Wi-Fi systems may detect the presence of people or objects in a given area.

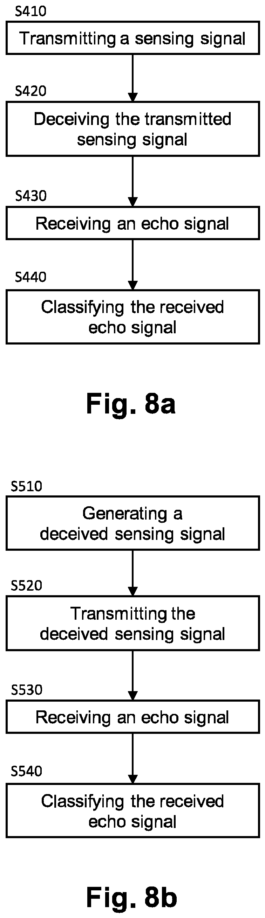

Fig. 8a is a flow diagram illustrating a sensing method according to an embodiment. The method comprises transmitting a sensing signal in step S410 and deceiving the sensing signal by manipulating hardware configured to interact with the transmitted sensing signal to introduce at least one deceptive feature into the transmitted sensing signal in step S420. For example, a fan or another moving or stationary object that is located within an area of interest (sensing area) may be used to introduce the deceptive feature(s) into the transmitted sensing signal. In step S430, an echo signal resulting from the transmitted sensing signal interacting with the manipulating hardware and an environment is received in step S430. For example, the sensing signal and the echo signal may be transmitted and received, respectively, by the same sensing device (monostatic sensing) or the sensing signal may be transmitted by a first sensing device and the echo signal may be received by a second sensing device (bistatic sensing). However, other sensing configurations as illustrated in Fig. 2 may be utilized. After having received the echo signal, it is classified in step S440 using an ML model trained as described above and an input instance based on the received echo signal. The input instance may be the received echo signal itself or may be an input instance obtained by performing certain pre-processing on the received echo signal.

Fig. 8b is another flow diagram illustrating a sensing method according to another embodiment. The sensing method is similar to the method illustrated in Fig. 8a, but differs therefrom in particular in that the transmitted signal already includes deceptive features. That is, a manipulating hardware is not necessarily required. In step S510, a deceived sensing signal is generated. This may be performed by introducing changes of phase, amplitude and/or frequency of a sensing signal in a predetermined manner. The deceived sensing signal is transmitted in step S520 and an echo signal resulting from the transmitted deceived signal interacting with an environment is received in step S530. Step S540, i.e. the classification of the received echo signal does not differ from step S440 of the method of Fig. 8a. That is, in step S540, the received echo signal is classifying using a ML model trained by a training method described above, and an input instance that is based on the received echo signal.

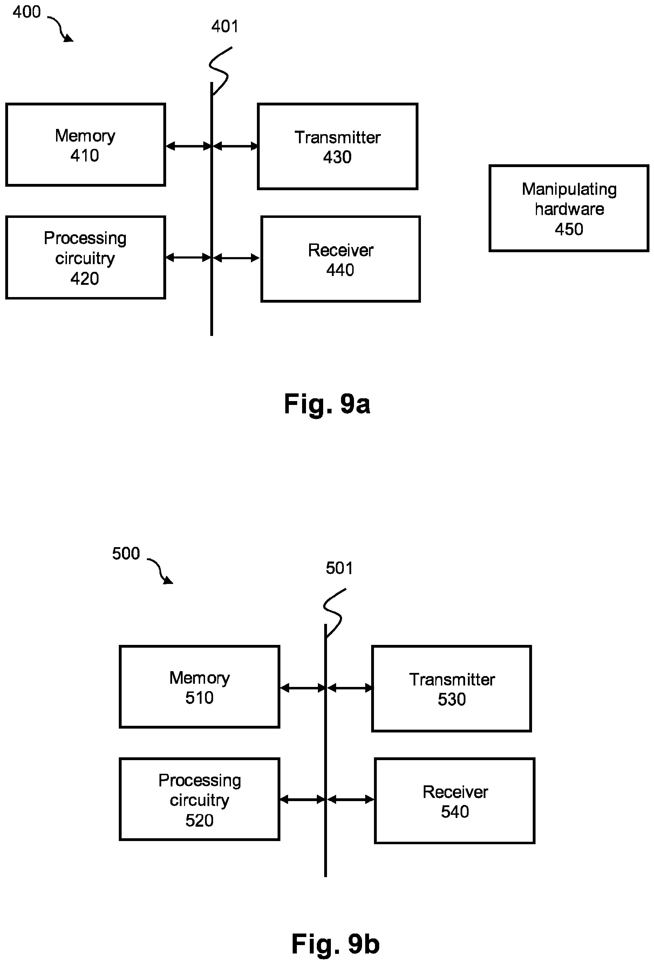

Fig. 9a is a block diagram illustrating an exemplary structure of a sensing system 400 according to an embodiment. The sensing system comprises a transceiver device and manipulating hardware 450. The manipulating hardware 450 may be provided separately for from the transceiver device. That is, the manipulating hardware may be a separate entity. However, the manipulating hardware 450 may be included in the transceiver device. The transceiver device comprises memory 410, processing circuitry 420, a transmitter 430, and a receiver 440. The transmitter 430 and the receiver 440 may be configured as a transceiver. The memory 410, the processing circuitry 420, the transmitter 430 and the receiver 440 are connected to each other and can communicate with each other via communication line 401. The processing circuitry 420 may control the other components by executing a program stored on the memory 410. The processing circuitry 420 may comprise one or more processors and/or other dedicated or programmable hardware. The transmitter 430 is configured to transmit a sensing signal. The manipulating hardware 450 is configured to deceive the transmitted sensing signal by interacting with the transmitted sensing signal to introduce at least one deceptive feature into the transmitted sensing signal. This may be achieved by the manipulating hardware 450 being configured as a stationary or moving structure located within a sensing area of the sensing system. The receiver 440 is configured to receive an echo signal resulting from the transmitted sensing signal interacting with the manipulating hardware and an environment. The processing circuitry 420 is configured to classify the received echo signal by using a machine learning model, trained by a training method as described further above, and an input instance that is based on the received echo signal. Optionally, the processing circuitry may output a result of the classification via communication line 401.

Fig. 9b is a block diagram illustrating an exemplary structure of a sensing system according to another embodiment. In contrast to the sensing system illustrated in Fig. 9a, the sensing system shown in Fig. 9b does not necessarily include manipulating hardware 450. The transceiver device comprises memory 510, processing circuitry 520, a transmitter 530, and a receiver 540. The transmitter 530 and the receiver may be configured as a transceiver. The memory 510, the processing circuitry 520, the transmitter 530 and the receiver 540 are connected to each other and can communicate with each other via communication line 501. The processing circuitry 520 may control the other components by executing a program stored on the memory 510. The processing circuitry 520 may comprise one or more processors and/or other dedicated or programmable hardware. The processing circuitry 520 is configured to generate a deceived sensing signal by introducing at least one deceptive feature into a sensing signal. This may be achieved by introducing a predetermined deceptive features into a common sensing signal. The transmitter 530 is configured to transmit the deceived sensing signal. The receiver 540 is configured to receive an echo signal resulting from the transmitted deceived sensing signal interacting with an environment. The processing circuitry 520 is configured to classify the received echo signal by using a machine learning model, trained by a training method as described further above, and an input instance that is based on the received echo signal. Optionally, the processing circuitry 520 may output a result of the classification via communication line 501.

The memory 510 may store information about a plurality of deceptive features and the processing circuitry 520 may be configured to introduce deceptive features into sensing signals with reference to the information stored in the storage. For example, the processing circuitry 520 may select a piece of information related to a deceptive feature from among the information about the plurality of deceptive features, either randomly or according to a predetermined pattern, and to introduce the deceptive feature in the sensing signal.

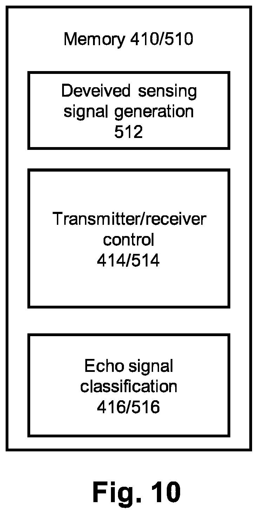

Fig. 10 is a block diagram illustrating an exemplary structure of a program memory 410, 510 of a sensing system 400, 500. The memory 410, 510 may store the program, which may be executed by the processing circuitry 420, 520 to perform steps of any of the above and below mentioned methods. The memory 410, 510 may includes a module 512 for generating a deceived sensing signal, a module 414, 514 for controlling a transmitter 430, 530 and a receiver 440, 540, and a module 516 for classify a received echo signal, using a ML model. These modules may be fetched from the memory and executed by the processing circuitry 420, 520.

Although sensing systems are illustrated in Fig. 9a and 9b, which perform monostatic sensing, multiple sensing devices may be provided in a sensing system, performing any of the sensing approaches as illustrated in Fig. 2.

The above described embodiments of the disclosure and some exemplary embodiments may provide one or more of the following advantages. The proposed method for training a ML model and the application thereof in a sensing system may increase security. Specifically, the performance of an illegitimate user may decrease drastically while the legitimate user may still be able to perform sensing successfully. Further, a received deceived signal can be obtained when the signal is generated(the signal that a legitimate user is transmitting). Also, the transmitted signal can be the normal signal, but the deceived signal can be obtained when the signal passes through the human as a sensing target for activity classification (for example just next to the human, there can be manipulating hardware which changes the sensing signal). The second method is especially useful when the illegitimate user generates its own signal

This disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the disclosure can be used in joint sensing and communication (JSC) technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, WLAN and Wi-Fi devices, etc. Other devices could be stand-alone wireless sensors, such as heart-rate monitors, motion detectors, smart watches, etc.

Some of the examples in this patent are based on wireless and wired local area network (LAN) communication according to the Institute of Electrical and Electronics Engineers (IEEE) 802.11 wireless standards, and the IEEE 802.3 Ethernet standards. However, the described implementations may be implemented in any device, system or network that is capable of transmitting and receiving RF signals according to any of the wireless communication standards, including any of the IEEE 802.11 standards, the Bluetooth standard, code division multiple access (CDMA), wideband CDMA (W-CDMA), frequency division multiple access (FDMA), time division multiple access (TDMA), Terrestrial Trunked Radio (TETRA), Global System for Mobile communications (GSM), General Packet Radio Service (GPRS), Enhanced Data GSM Environment (EDGE), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), or other known signals that are used to communicate within a wireless, cellular or loT network, such as a system utilizing 3G, 4G, or 5G, or further implementations thereof, technology.

### Implementations in software and hardware

The methodologies described herein may be implemented by various means depending on the application. For example, these methodologies may be implemented in hardware, operation system, firmware, software, or any combination of two or all of them. For a hardware implementation, any processing circuitry may be used, which may include one or more processors. For example, the hardware may include one or more of application-specific integrated circuits (ASICs), digital signal processors (DSPs), digital signal processing devices (DSPDs), programmable logic devices (PLDs), field-programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer-readable storage medium such as the memory 610 or any other type of storage. The computer-readable media includes physical computer storage media, which may be any available medium that can be accessed by the computer, or, in general by the processing circuitry 620. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc, or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, methods and techniques are described for training of and application of a machine learning model, wherein a deceived input dataset is utilized for training of the ML model, allowing for reducing the chances that an illegitimate attacker trying to obtain information by passive sensing successfully classifies an echo signal.

According to a first aspect, provided is a training method for training of a machine learning model, comprising: obtaining a first dataset comprising a plurality of first input instances and associated first output labels; and generating a second dataset comprising a plurality of second input instances and associated second output labels. The second dataset is generated by selecting a subset of the plurality of first input instances and associated first output labels, generating the plurality of second input instances by introducing a deceptive feature into each of the subset of the first input instances, and setting the first output labels associated with the subset of the first input instances as the second output labels. The method further comprises training a machine learning model using the second dataset.

In an embodiment, the method further comprises testing the machine learning model using a plurality of third input instances, wherein at least one of the third input instances includes a deceptive feature.

In an embodiment, the method further comprises training the machine learning model using the first dataset.

In an embodiment, in generating the plurality of second input instances, deceptive features introduced into the subset first input instances differ for at least two first input instances from among the subset of fist input instances.

In an embodiment, in generating the plurality of second input instances, at least two deceptive features are introduced into at least one of the subset of first input instances.

In an embodiment, each of the first input instances represents an echo radio signal resulting from interaction of a sensing signal with an environment comprising a target.

For example, the target includes a human being, an object, the environment, and/or a living creature.

In an embodiment, in generating the second input instances, the deceptive feature is introduced by altering at least one of an amplitude, a phase, and a phase shift of the subset of first instances.

In an embodiment, the deceptive feature mimics a feature resulting from interaction of the sensing signal with the target.

In an embodiment, the sensing signal is a signal for joint sensing and communication.

According to a second aspect, provided is a sensing method, comprising transmitting a sensing signal; deceiving the transmitted sensing signal by manipulating hardware configured to interact with the transmitted sensing signal to introduce at least one deceptive feature into the transmitted sensing signal; receiving an echo signal resulting from the transmitted sensing signal interacting with the manipulating hardware and an environment; and classifying the received echo signal using a machine learning model, trained by a training method according to the first aspect or any of its embodiments, and an input instance that is based on the received echo signal.

According to a third aspect, provided is a sensing method, comprising generating a deceived sensing signal by introducing at least one deceptive feature into a sensing signal; transmitting the deceived sensing signal; receiving an echo signal resulting from the transmitted deceived signal interacting with an environment; and classifying the received echo signal using a machine learning model, trained by a training method according to the first aspect or any of its embodiments, and an input instance that is based on the received echo signal.

Further provided is a computer program stored in a non-transitory, computer-readable medium, the program comprising code instructions which, when executed on one or more processors, cause the one or more processors to perform steps of any of above methods.

According to a fourth aspect, provided is a sensing system, comprising a transmitter configured to transmit a sensing signal; manipulating hardware configured to deceive the transmitted sensing signal by interacting with the transmitted sensing signal to introduce at least one deceptive feature into the transmitted sensing signal; a receiver configured to receive an echo signal resulting from the transmitted sensing signal interacting with the manipulating hardware and an environment; and processing circuitry configured to classify the received echo signal by using a machine learning model, trained by a training method according to any one of above methods, and an input instance that is based on the received echo signal.

According to a fifth aspect, provided is a sensing system, comprising processing circuitry configured to generate a deceived sensing signal by introducing at least one deceptive feature into a sensing signal; a transmitter configured to transmit the deceived sensing signal; and a receiver configured to receive an echo signal resulting from the transmitted deceived sensing signal interacting with an environment, wherein the processing circuitry is further configured to classify the received echo signal by using a machine learning model, trained by a training method according to any of above methods, and an input instance that is based on the received echo signal.

Moreover, the corresponding methods are provided including steps performed by any of the above-mentioned processing circuitry implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transmitter and/or the receiver is embedded in an integrated circuit (IC).

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. A training method for training of a machine learning model, comprising:
obtaining a first dataset comprising a plurality of first input instances and associated first output labels;
generating a second dataset comprising a plurality of second input instances and associated second output labels, by
selecting a subset of the plurality of first input instances and associated first output labels,
generating the plurality of second input instances by introducing a deceptive feature into each of the subset of the first input instances, and
setting the first output labels associated with the subset of the first input instances as the second output labels; and
training a machine learning model using the second dataset.

2. The training method according to claim 1, further comprising
testing the machine learning model using a plurality of third input instances, wherein at least one of the third input instances includes a deceptive feature.

3. The training method according to claim 1 or 2, further comprising training the machine learning model using the first dataset.

4. The training method according to any one of claims 1 to 3, wherein
in generating the plurality of second input instances, deceptive features introduced into the subset first input instances differ for at least two first input instances from among the subset of fist input instances.

5. The training method according to any one of claims 1 to 4, wherein
in generating the plurality of second input instances, at least two deceptive features are introduced into at least one of the subset of first input instances.

6. The training method according to any one of claims 1 to 5, wherein
each of the first input instances represents an echo radio signal resulting from interaction of a sensing signal with an environment comprising a target.

7. The training method according to claim 6, wherein
the target includes a human being, an object, the environment, and/or a living creature.

8. The training method according to any one of claims 6 or 7, wherein
in generating the second input instances, the deceptive feature is introduced by altering at least one of an amplitude, a phase, and a phase shift of the subset of first instances.

9. The training method according to any one of claims 6 to 8, wherein
the deceptive feature mimics a feature resulting from interaction of the sensing signal with the target.

10. The training method according to any one of claims 6 to 9, wherein
the sensing signal is a signal for joint sensing and communication.

11. A sensing method, comprising
transmitting a sensing signal;
deceiving the transmitted sensing signal by manipulating hardware configured to interact with the transmitted sensing signal to introduce at least one deceptive feature into the transmitted sensing signal;
receiving an echo signal resulting from the transmitted sensing signal interacting with the manipulating hardware and an environment; and
classifying the received echo signal using a machine learning model, trained by a training method according to any one of claims 1 to 10, and an input instance that is based on the received echo signal.

12. A sensing method, comprising
generating a deceived sensing signal by introducing at least one deceptive feature into a sensing signal;
transmitting the deceived sensing signal;
receiving an echo signal resulting from the transmitted deceived signal interacting with an environment; and
classifying the received echo signal using a machine learning model, trained by a training method according to any one of claims 1 to 10, and an input instance that is based on the received echo signal.

13. A computer program stored in a non-transitory, computer-readable medium, the program comprising code instructions which, when executed on one or more processors, cause the one or more processors to perform steps of a method according to any of claims 1 to 12.

14. A sensing system, comprising
a transmitter configured to transmit a sensing signal;
manipulating hardware configured to deceive the transmitted sensing signal by interacting with the transmitted sensing signal to introduce at least one deceptive feature into the transmitted sensing signal;
a receiver configured to receive an echo signal resulting from the transmitted sensing signal interacting with the manipulating hardware and an environment; and
processing circuitry configured to classify the received echo signal by using a machine learning model, trained by a training method according to any one of claims 1 to 10, and an input instance that is based on the received echo signal.

15. A sensing system, comprising
processing circuitry configured to generate a deceived sensing signal by introducing at least one deceptive feature into a sensing signal;
a transmitter configured to transmit the deceived sensing signal; and
a receiver configured to receive an echo signal resulting from the transmitted deceived sensing signal interacting with an environment,
wherein the processing circuitry is further configured to classify the received echo signal by using a machine learning model, trained by a training method according to any one of claims 1 to 10, and an input instance that is based on the received echo signal.
